# EUROPÄISCHE PATENTSCHRIFT

(11) **EP 0 885 713 B1**
(45) Veröffentlichungstag und Bekanntmachung des Hinweises auf die Patenterteilung: **10.05.2000**
(21) Anmeldenummer: 98890176.5
(22) Anmeldetag: 10.06.1998
(51) Int. Cl.: B29C 65/20, E06B 3/96

(54) **Vorrichtung zum gleichzeitigen Verschweissen von mindestens vier auf Gehrung geschnittenen Profilabschnitten**
Apparatus for simultaneous welding of at least four mitre cut profiled cutouts
Appareil pour le soudage simultané d'au moins quatre morceaux profilés découpés en onglet

(30) Priorität: 18.06.1997 AT 37297 U
(43) Veröffentlichungstag der Anmeldung: 23.12.1998
(73) Patentinhaber: Technoplast Kunststofftechnik Gesellschaft m.b.H., 4563 Micheldorf (AT)
(72) Erfinder: Schwaiger, Meinhard, Dipl.-Ing., 4020 Linz (AT)
(74) Vertreter: Babeluk, Michael, Dipl.-Ing. Mag.

(56) Entgegenhaltungen:
- EP-A- 0 521 723
- EP-A- 0 678 374
- AT-B- 393 809
- DE-A- 2 545 944

## Beschreibung

Die vorliegende Erfindung betrifft eine Vorrichtung zum gleichzeitigen Verschweißen von mindestens vier auf Gehrung geschnittenen Profilabschnitten aus Kunststoff zu Fenster- oder Türflügeln oder -rahmen mit vier Schweißköpfen, die relativ zueinander beweglich angeordnet sind, wobei im Bereich jedes Schweißkopfes Anschläge vorgesehen sind, um die Enden der Profilabschnitte nach außen hin abzustützen, und wobei weiters Distanzelemente vorgesehen sind, die die auf Gehrung geschnittenen Flächen der Profilabschnitte abstützen.

Zur Herstellung von Fensterrahmen oder Fensterflügeln aus PVC-Profilen sind sogenannte Vierkopf-Schweißmaschinen bekannt. Bei diesen Schweißmaschinen sind vier Schweißköpfe horizontal oder annähernd vertikal angeordnet, um an den Ecken des entsprechenden Rahmens die erforderlichen Schweißvorgänge durchzuführen. Um die verschiedenen Baugrößen von Fensterflügeln herstellen zu können, sind diese Schweißköpfe gegeneinander verschiebbar. Aus der AT-B 393 809 ist eine solche Vierkopf-Schweißmaschine bekannt. Weiters ist aus der US-A 4 995 935 eine Schweißmaschine bekannt, bei der die eingelegten Profilabschnitte an ihren Außenseiten durch Anschläge gehalten werden, und bei der Distanzelemente vorgesehen sind, um die eingelegten Profilabschnitte zunächst zu halten. Durch die Anschläge und die Distanzelemente wird für jeden Profilabschnitt eine Form gebildet, in die dieser genau passend eingelegt werden kann. Das Einlegen kann dabei händisch oder durch einen entsprechenden Industrieroboter erfolgen.

Problematisch bei bekannten Schweißmaschinen ist allerdings, daß die Länge der Profilabschnitte einer gewissen Toleranz unterworfen ist. Die Schweißköpfe und damit die Lage der Anschläge und der Distanzelemente ist auf das Nennmaß der Profilabschnitte eingestellt. Wenn nun ein Profilabschnitt eingelegt wird, dessen Länge größer ist als das Nennmaß. dann müssen sich Teile verformen, um ein Einlegen überhaupt zu ermöglichen. Beispielsweise kann sich der Profilabschnitt nach außen hin durchbiegen. Es kann aber auch zu einer unerwünschten Verschiebung der Distanzelemente kommen. Wenn umgekehrt der Profilabschnitt kleiner als das Nennmaß ist, dann wird er durch die Anschläge und die Distanzelemente nicht mehr in einer wohldefinierten Lage festgehalten, sondern er kann schräg oder von den Anschlägen entfernt liegend angeordnet sein. Dadurch ist nicht mehr gewährleistet, daß die auf Gehrung geschnittenen Enden der Profilabschnitte beim Verschweißen positionsmäßig genau abgestimmt zueinander bewegt werden. Es kommt vielmehr zu einem Eckversatz, der nicht nur eine ästhetische Beeinträchtigung darstellt, sondern auch die Funktion eines solchen Fensters oder einer solche Tür verschlechtert.

Aus der DE 40 24 634 A ist eine Schweißmaschine bekannt, bei der die Schweißköpfe quer zur Richtung der Schweißnaht beweglich sind. Dadurch kann ein Schrumpfungsvorgang durch das Verschweißen bis zu einem bestimmten Ausmaß ausgeglichen werden, die obigen Probleme werden dadurch jedoch nicht gelöst.

Weiters zeigt die EP 0 341 235 A eine Schweißmaschine, mit der mehrere Rahmen gleichzeitig verschweißt werden können. Jedoch auch diese Druckschrift zeigt keine Lösung der Probleme, wie sie oben beschrieben sind.

Aufgabe der vorliegenden Erfindung ist es, diese Nachteile zu vermeiden, und die eingangs beschriebene Vorrichtung so weiterzubilden, daß auch bei Vorliegen gewisser Schwankungen in der Länge der Profilabschnitte Flügel und Rahmen mit exakten Abmessungen und exakter Eckenausbildung hergestellt werden können.

Diese Aufgabe wird erfindungsgemäß dadurch gelöst, daß die Distanzelemente mit Federn ausgestattet sind. Wesentlich an der vorliegenden Erfindung ist, daß unabhängig von gewissen Schwankungen der Länge der Profilabschnitte stets eine wohldefinierte Lage der Profilabschnitte beim Einlegen erreicht wird. Die auftretenden Kräfte sollen dabei jedoch nicht so groß sein, daß es zu unerwünschten Verformungen kommt. Durch die Federn kann ein sicheres Anliegen an den Anschlägen erreicht werden. Nach dem Einlegen aller vier Profilabschnitte werden diese durch entsprechende Klemmvorrichtungen in an sich bekannter Weise festgeklemmt, worauf die Distanzelemente herausgezogen werden können. In der Folge wird ein Schweißspiegel in den verbleibenden Spalt eingeführt, und es werden die Profilenden aufgeschmolzen und nach dem Herausziehen des Schweißspiegels miteinander verschweißt. Die Längentoleranzen der Profilabschnitte werden dabei durch eine unterschiedliche Aufschmelztiefe beim Schweißvorgang ausgeglichen. Dies bedeutet, daß bei Vorliegen von Profilabschnitten mit minimalen Abmessungen auch nur eine minimale Aufschmelztiefe realisiert wird. Im Gegensatz dazu werden Profilabschnitte von einer Länge, die über der Nennlänge liegt, stärker aufgeschmolzen.

Vorzugsweise ist vorgesehen, daß die Distanzelemente aus einem exakt geführten Träger bestehen, an dem Federplatten angeordnet sind. Auf diese Weise kann erreicht werden, daß die Toleranzbereiche der einzelnen Profilabschnitte weitgehend unabhängig voneinander sind, und daß die Funktionsweise der erfindungsgemäßen Vorrichtung nicht beeinträchtigt wird. Es ist beispielsweise möglich, daß die senkrechten Profilabschnitte innerhalb des Toleranzbereiches eine maximale Länge aufweisen, während die waagrechten Profilabschnitte von minimaler Länge sind. In diesem Fall federn die einen Federplatten sehr stark ein, um die großen Profilabschnitte aufnehmen zu können. Die anderen Federplatten federn nur minimal ein, und zwar gerade so stark, daß der Profilabschnitt sicher gehalten wird.

In der Folge wird die Erfindung anhand des in den Figuren dargestellten Ausführungsbeispieles näher erläutert. Es zeigen:
Fig. 1 schematisch eine teilweise Draufsicht auf eine Profilschweißvorrichtung nach dem Stand der Technik,
Fig. 2 ein Detail von Fig. 1,
Fig. 3 eine mit der Vorrichtung nach dem Stand der Technik hergestellte Eckverbindung und Fig.4 ein Detail entsprechend der Fig.2 einer erfindungsgemäßen Vorrichtung.

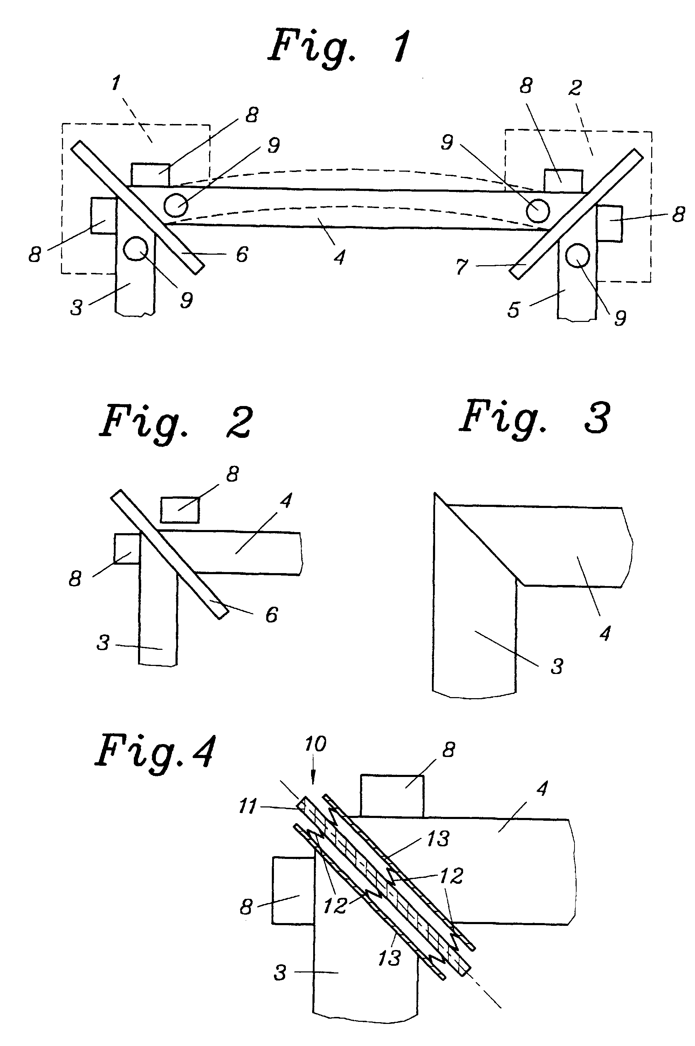

In der Fig. 1 sind die zwei oberen Schweißköpfe 1 und 2 einer Vierkopf-Schweißmaschine angedeutet. Profilabschnitte 3, 4 und 5 sind in die Schweißmaschine eingelegt. Die Profilabschnitte 3, 4 und 5 sind an ihren Enden mit einem Gehrungswinkel von 45° geschnitten, um zu einem Fensterrahmen oder einem Fensterflügel zusammengesetzt zu werden. Die Profilabschnitte 3, 4 und 5 werden durch Distanzelemente 6 und 7 gehalten, die so angeordnet sind, daß die Gehrungsschnittflächen auf ihnen aufliegen. Weiters sind in den Endbereichen der Profile an der Außenseite Anschläge 8 vorgesehen, die eine eindeutige Lage der Profile 3, 4 und 5 festlegen. Mit 9 sind Klemmvorrichtungen bezeichnet, die das Profil halten, nachdem die Distanzelemente 6, 7 herausgezogen worden sind.

Wenn der Profilabschnitt 4 länger als das Nennmaß ist, dann wird der Profilabschnitt versuchen, seitlich auszuweichen, was insbesonders bei relativ langen und dünnen Profilen kritisch ist. Auf diese Weise hergestellte Fensterrahmen od. -flügel sind verzogen, und sie weichen in ihren Abmessungen von den geforderten Maßen ab. In der Fig. 1 ist mit unterbrochenen Linien eine solche Situation übertrieben dargestellt.

In der Fig. 2 ist eine Situation dargestellt, bei der der Profilabschnitt 4 kürzer als die Nennlänge ist. Fertigungsbedingt kann die Länge der Profilabschnitte etwa um 1 mm von der Solllänge Abweichen. Im Falle des verkürzten Profilabschnitts 4 ist eine eindeutige Lage nicht mehr definiert, und es kann im Bereich eines Schweißkopfs zu einer Situation kommen, wie sie in der Fig. 2 dargestellt ist. Wenn die Klemmbacken 9 in dieser Lage schließen, wird eine Eckenausbildung erreicht, wie sie in der Fig. 3 in vergrößertem Maßstab dargestellt ist. Eine solche Eckenausbildung ist nicht nur in ästhetischer Hinsicht unbefriedigend, auch funktionell ergeben sich dadurch Probleme.

In der Fig. 4 ist die erfindungsgemäße Lösung schematisch dargestellt. Das Distanzelement 10 besteht aus einem Träger 11, an dem über Federn 12 Federplatten 13 angebracht sind. Die Anschläge 8 sind in bekannter Art und Weise ausgeführt. Der Federweg der Federn 12 ist so bemessen, daß bei einem Profilabschnitt mit minimalen Abmessungen, d. h. mit einem Profilabschnitt, bei dem der Toleranzbereich in Richtung kleiner Länge völlig ausgeschöpft ist, noch eine ausreichende Anpreßkraft zur Verfügung gestellt wird, um ein sicheres Anliegen an dem Anschlag 8 zu ermöglichen. Andererseits sind die Federn 12 so ausgebildet, daß auch bei Vorliegen eines Profilabschnitts 4 maximaler Länge keinerlei unzulässige Verformung des Profilabschnitts 4 oder anderer Bauteile auftritt. Der Träger 11 ist während des Einlegens der Profilabschnitte 3, 4 starr, d. h. er kann auch durch unterschiedliche Kräfte, die unter Umständen an seinen beiden Seiten vorliegen, nicht aus seiner Sollposition gedrückt werden. Nach dem Schließen der in der Fig.4 nicht dargestellten Klemmbacken, wird das erfindungsgemäße Distanzelement 10 in an sich bekannter Weise aus dem Spalt zwischen den Profilabschnitten 3, 4 herausgezogen, und es wird an dessen Stelle ein ebenfalls nicht dargestellter Schweißspiegel eingeführt, der die Profilenden erwärmt, um das Verschweißen zu ermöglichen.

Die Erfindung ermöglicht die Herstellung maßgenauer Fensterflügel und Fensterrahmen bzw. Türflügel od. Türrahmen aus PVC-Profilen od. dgl. auch dann, wenn die Profilabschnitte, von denen ausgegangen wird, gewissen Längentoleranzen unterworfen sind.

## Patentansprüche

1. Vorrichtung zum gleichzeitigen Verschweißen von mindestens vier auf Gehrung geschnittenen Profilabschnitten (3, 4, 5) aus Kunststoff zu Fenster- oder Türflügeln oder -rahmen mit vier Schweißköpfen (1, 2), die relativ zueinander beweglich angeordnet sind, wobei im Bereich jedes Schweißkopfes (1, 2) Anschläge vorgesehen sind, um die Enden der Profilabschnitte (3, 4, 5) nach außen hin abzustützen, und wobei weiters Distanzelemente (10) vorgesehen sind, die die auf Gehrung geschnittenen Flächen der Profilabschnitte (3, 4, 5) abstützen, **dadurch gekennzeichnet,** daß die Distanzelemente (10) mit Federn (12) ausgestattet sind.

2. Vorrichtung nach Anspruch 1, **dadurch gekennzeichnet,** daß die Distanzelemente (10) aus einem exakt geführten Träger (11) bestehen, an dem beidseits Federplatten (13) angeordnet sind.

3. Vorrichtung nach einem der Ansprüche 1 oder 2, **dadurch gekennzeichnet,** daß die Federn (12) so ausgebildet sind, daß bei minimaler Abmessung des Profilabschnitts (3, 4, 5) eine ausreichende Haltekraft zwischen Anschlag (8) und Distanzelement (10) gewährleistet ist, und daß bei maximaler Abmessung des Profilabschnitts (3, 4, 5) eine unerwünschte Verformung von Bauteilen verhindert wird.

## Claims

1. An apparatus for the simultaneous welding of at least four plastic profile sections (3, 4, 5) cut for mitre joint for window or door leaves or frames with four welding heads (1, 2) which are arranged moveable relative towards one another, with stops being provided in the zone of each welding head (1, 2) in order to outwardly support the ends of the profile sections (3, 4, 5) and with spacer elements (10) being provided which support the surfaces of the profile sections (3, 4, 5) cut for mitre joint, **characterized in** that the spacer elements (10) are outfitted with springs (12).

2. An apparatus as claimed in claim 1, **characterized in** that the spacer elements (10) consist of a precisely guided carrier (11) on which diaphragms (13) are arranged on both of its sides.

3. An apparatus as claimed in claim 1 or 2, **characterized in** that the springs (12) are arranged in such a way that in the case of minimal dimensioning of the profile section (3, 4, 5) a sufficient holding force is ensured between the stop (8) and the spacer element (10) and that in the case of maximum dimensioning of the profile section (3, 4, 5) an undesirable deformation of components is prevented.

## Revendications

1. Dispositif pour souder simultanément au moins quatre segments de profilés (3, 4, 5) coupés en onglet, en matière plastique, pour la fabrication de battants ou de châssis de fenêtres et de portes, à l'aide de quatre têtes de soudage (1, 2) mobiles de manière relative les unes par rapport aux autres, tandis que
dans la zone de chaque tête de soudage (1, 2) il y a des butées pour soutenir vers l'extérieur les extrémités des segments de profilés (3, 4, 5) et
des éléments d'écartement (10) appuient les surfaces des segments de profilés (3, 4, 5) coupées en onglet,
caractérisé en ce que
les éléments d'écartement (10) sont équipés de ressorts (12).

2. Dispositif selon la revendication 1,
caractérisé en ce que
les éléments d'écartement (10) sont formés d'un support (11) guidé exactement et portant, des deux côtés, des plaques à ressorts (13).

3. Dispositif selon l'une des revendications 1 ou 2,
caractérisé en ce que
- les ressorts (12) ne sont réalisés que pour une dimension minimale du segment de profilé (3, 4, 5), de manière à garantir une force de tenue suffisante entre la butée (8) et l'élément d'écartement (10), et
- pour une dimension maximale du segment de profilé (3, 4, 5) on évite une déformation gênante des pièces.
